# FASCICULE DE BREVET EUROPEEN

(11) **EP 3 071 717 B1**
(45) Date de publication et mention de la délivrance du brevet: **06.12.2017**
(21) Numéro de dépôt: 14809524.3
(22) Date de dépôt: 13.11.2014
(51) Int. Cl.: C22B 3/44, C22B 7/00, C22B 3/00, C22B 47/00, C22B 59/00

(54) **PROCEDE DE RECUPERATION DES METAUX CONTENUS DANS UN ACCUMULATEUR DE TYPE NI-MH**
VERFAHREN ZUR RÜCKGEWINNUNG VON METALLEN IN EINEM NI-MH-AKKU
METHOD FOR RECOVERING METALS CONTAINED IN AN NI-MH BATTERY

(30) Priorité: 18.11.2013 FR 1361289
(43) Date de publication de la demande: 28.09.2016
(73) Titulaire: Commissariat à l'Énergie Atomique et aux Énergies Alternatives, 75015 Paris (FR)
(72) Inventeur: LAUCOURNET, Richard, F-38500 La Buisse (FR); BILLY, Emmanuel, F-38100 Grenoble (FR)
(74) Mandataire: Gevers & Orès
(86) Numéro de dépôt international: PCT/IB2014/066008
(87) Numéro de publication internationale: WO 2015/071848

(56) Documents cités:
- EP-A1- 2 444 507
- EP-A1- 2 450 991
- US-A- 5 429 887
- RABAH M A ET AL: "Recovery of nickel, cobalt and some salts from spent Ni-MH batteries", WASTE MANAGEMENT, ELSEVIER, NEW YORK, NY, US, vol. 28, no. 7, 1 janvier 2008 (2008-01-01), pages 1159-1167, XP022613794, ISSN: 0956-053X, DOI: 10.1016/J.WASMAN.2007.06.007 [extrait le 2008-01-01]

## Description

L'invention concerne un procédé de récupération sélective des terres rares, du nickel, du cobalt, du manganèse et du fer contenus dans un accumulateur nickel-hydrure métallique.

Un accumulateur nickel-hydrure métallique ou Ni-MH est un accumulateur électrique rechargeable utilisant un hydrure métallique, qui est un composé permettant de stocker de l'hydrogène, et de l'oxyhydroxyde de nickel comme électrode.

Ce type d'accumulateur est très largement utilisé, en particulier dans le domaine domestique où ils sont d'un usage courant.

Hormis le nickel (sous forme d'oxyhydroxyde) de l'électrode positive, les accumulateurs Ni-MH utilisent comme électrolyte une solution d'hydroxyde de potassium (potasse-KOH) ainsi qu'un alliage hydrurable à base de terres rares (généralement le lanthane) et de nickel de type LaNi₅.

Ainsi, J. Hejdecke et al. dans J. Hejdecke, H.-A. Kiehne, Ni-Cd- und Ni-MH-Batterien für mobile Kommunikation, Spezial Report, Hannover, Varta AG, 1997**,** indique comme composition typique des accumulateurs Mi-MH, la composition reportée au tableau 1 suivant :

**Tableau 1**

| Elément | Pile bouton | Pourcentage en masse | |
|---|---|---|---|
| | | Pile cylindrique | Pile prismatique |
| Nickel | 29-39 | 36-42 | 38-40 |
| Fer | 31-47 | 22-25 | 6-9 |
| Cobalt | 2-3 | 3-4 | 2-3 |
| La, Ce, Nd, Pr | 6-8 | 8-10 | 7-8 |
| Graphite | 2-3 | <1 | <1 |
| Plastiques | 1-2 | 3-4 | 16-19 |
| Potassium | 1-2 | 1-2 | 3-4 |
| hydrogène, oxygène | 8-10 | 15-17 | 16-18 |
| Autres | 2-3 | 2-3 | 3-4 |

Or, à l'heure actuelle, tous les métaux contenus dans de tels accumulateurs sont soumis à une forte demande, notamment en ce qui concerne le nickel, le cobalt et les terres rares.

En particulier, la récupération des terres rares à partir des accumulateurs Ni-MH peut s'avérer intéressante sur le plan économique et sur le plan environnemental. En effet, l'extraction des terres rares à partir du minerai nécessite de nombreuses étapes hydrométallurgiques nécessaires à leur concentration et à leur purification.

De plus, la présence de nombreux autres éléments chimiques (K, Zr, Ti, V, Cr) et de particules de carbone rend complexe la récupération sélective de ces métaux à extraire et à valoriser.

A ce jour, plusieurs solutions de traitement existent à l'échelle industrielle ou ont été développées à l'échelle du laboratoire.

Ainsi, le procédé de la société UMICORE traite à la fois les accumulateurs usagés Ni-MH et Li-ion par voie pyrométallugique. Ce procédé permet d'obtenir tout d'abord un alliage métallique ou le nickel et le cobalt sont séparés par voie hydrométallurgique sous la forme de chlorure de cobalt et de sulfate de nickel.

Ce procédé présente les désavantages de requérir de l'énergie pour atteindre une température d'environ 1500°C, d'émettre des gaz de combustion qu'il faut traiter et de nécessiter une étape séparative qui rend le procédé global long, complexe avec peu de matériaux réellement réutilisables.

Le procédé décrit dans le brevet EP 2 444 507 comprend une étape de broyage, puis une attaque acide non oxydante très concentrée (>18%) à chaud (80°C), puis une remontée du pH à 3 et un ajout de Na₂SO₄ en forte concentration (150 g/l) afin de précipiter les terres rares sous forme de sulfates. Ce procédé présente l'inconvénient d'utiliser un acide très concentré à chaud et surtout de conduire à des sulfates de terres rares qui peuvent contenir des quantités importantes de jusqu'à plus de 200 ppm d'impuretés telles que Na (en raison d'un ajout massif de sulfate de sodium) et K qui provient de l'électrolyte.

La demande de brevet EP 03 411 119 décrit un procédé de récupération du Co et des terres rares par extraction liquide/liquide à partir de résidus provenant de la fabrication des aimants.

Ce procédé comprend une étape de dissolution des résidus dans l'acide nitrique. Cette phase est mise en contact avec une phase organique contenant un agent permettant l'extraction des terres rares de la solution initiale. Les agents d'extraction sont des produits commercialisés sous la marque PRIMENE JT et le solvant organique peut être un ou un mélange hydrocarbures aliphatiques (kérosène) ou aromatiques (mélanges d'akylbenzène). L'inconvénient majeur de cette technique est la nécessité de répéter de nombreuses fois l'étape d'extraction afin d'obtenir une bonne séparation entre les éléments. De plus, la phase organique, le plus souvent toxique, présente une certaine solubilité dans la phase aqueuse ce qui complique la gestion des rejets en fin de procédé. Les terres rares sont récupérées par précipitation.

Le brevet US 5,129,945 décrit un procédé de traitement d'alliages métalliques contenant des métaux de transition et des terres rares. Ce procédé comprend une attaque des métaux à l'acide sulfurique, puis une précipitation d'un sulfate de terres rares au moyen d'un ajout de base concentrée à pH=1,5. Le sulfate récupéré est ensuite converti soit en fluorure par réaction avec de l'HF puis en métal par électro-réduction, soit en oxalate par réaction avec de l'acide oxalique puis en oxyde par calcination. Cependant, le domaine de précipitation du sulfate de terres rares est voisin de celui de l'hydroxyde de FerIII. Cela signifie un taux d'impureté en fer important, de l'ordre de 1% et plus, et une nécessité de travailler en atmosphère neutre pour éviter la réaction d'oxydation du fer en solution Fe²⁺→Fe³⁺.

Le brevet US 5,478,664 décrit une méthode de récupération des métaux contenus dans des accumulateurs de type Ni-MH par calcination et électrolyse en sels fondus fluorés à une température inférieure à 1400°C. L'inconvénient de ce procédé est l'obtention d'un alliage métallique contenant à la fois des terres rares, du nickel, du cobalt, du manganèse et de l'aluminium.

Le brevet US 5,429,887 décrit un procédé de traitement des batteries Ni-MH comprenant une étape de démontage de l'enveloppe, puis un traitement de dissolution partielle des éléments actifs permettant la séparation des deux électrodes et le séparateur, puis la dissolution complète de l'électrode négative contenant les terres rares (La, Ce) et les métaux de transition (Ni, Co, Mn). Les terres rares sont récupérées par précipitation de phosphates et les métaux de transition par extraction liquide/liquide ou précipitation. Cependant, la présence de fer n'est pas prise en compte alors qu'elle est bien réelle, comme montré au tableau 1 précédent. Cette présence va perturber la récupération des terres rares par précipitation de phosphates car le phosphate de fer présente une très faible solubilité. De plus, les métaux de transition sont récupérés en mélange et non pas sous la forme de composés purifiés, ce qui réduit fortement leurs valeurs.

Ainsi, dans les procédés de l'art antérieur, il n'y a pas de séparation des métaux contenus dans les accumulateurs Ni-MH. En effet, la plupart des composés issus des procédés de l'art antérieur sont des mélanges d'éléments métalliques, ce qui réduit considérablement leur valorisation. Leur pureté n'est d'ailleurs que rarement mentionnée. De plus, les rendements de récupération sont souvent absents, ce qui rend difficile l'évaluation de leur réelle efficacité.

Dès lors, l'invention a pour but de fournir un procédé de récupération sélective des terres rares, du nickel, du cobalt, du manganèse et du fer contenu dans un accumulateur Ni-MH.

Le procédé de l'invention permet d'obtenir des sels ou des hydroxydes de ces éléments, avec une bonne pureté, c'est-à-dire contenant moins de 100 ppm d'impuretés telles que, en particulier Na et K, avec une récupération par précipitation sélective simple à mettre en oeuvre, sans investissement conséquent.

Ainsi, l'invention propose un procédé de récupération sélective des terres rares, du nickel, du cobalt, du manganèse et du fer contenu dans un accumulateur Ni-MH comprenant les étapes suivantes :
a) broyage de l'accumulateur,
b) élimination de la potasse contenue dans l'accumulateur broyé obtenu à l'étape a), par lavage avec de l'eau,
c) séparation de la phase aqueuse contenant la potasse, par filtration et récupération d'une part, d'une phase solide et, d'autre part, de la phase aqueuse,
d) broyage de la phase solide obtenue,
e) séparation des parties broyées de la phase solide ayant une plus grande dimension inférieure à 1 mm et récupération de cette phase solide ayant une plus grande dimension inférieure à 1 mm, cette phase étant appelée "black mass",
f) dissolution de la "black mass" obtenue dans un acide,
g) élimination des particules de carbone et/ou de polymères résiduelles,
h) oxydation du fer de degré d'oxydation +2 contenu dans la solution obtenue après les étapes f) et g) en fer de degré d'oxydation +3,
i) précipitation du fer de degré d'oxydation +3 par ajustement du pH de la solution dans lequel il est contenu à 3,5,
j) séparation et lavage à l'eau du précipité obtenu à l'étape i),
k) ajustement du pH de la solution obtenue après l'étape j) à 1,
l) ajout de NaClO dans la solution obtenue à l'étape k) pour former un précipité de MnO₂,
m) séparation et lavage à l'eau du précipité de MnO₂,
n) ajustement du pH de la solution obtenue après l'étape m) à 3,
o) ajout de NaClO dans la solution obtenue à l'étape n) pour former un précipité de Co₂O₃.3H₂O,
p) séparation et lavage à l'eau du précipité de Co₂O₃.3H₂O, formé à l'étape o),
q) ajustement du pH de la solution obtenue à l'étape p) à 1,
r) ajout d'acide oxalique dans la solution obtenue à l'étape q) pour précipiter les terres rares sous forme d'oxalate,
s) séparation et lavage à l'eau du précipité formé à l'étape r),
t) ajustement du pH de la solution obtenue après l'étape s) pour former un précipité de Ni(OH)₂, et
u) séparation et lavage à l'eau du précipité obtenu à l'étape t).

Dans un premier mode de mise en oeuvre, le procédé de l'invention comprend de plus, après l'étape c) et avant l'étape d), une étape de séchage de la phase solide obtenue à l'étape c) à une température inférieure à 100°C.

Dans ce premier mode de mise en oeuvre, de préférence l'étape g) d'élimination des particules de carbone et/ou de polymères est une étape de filtration de la solution obtenue à l'étape f).

Dans un second mode de mise en oeuvre du procédé de l'invention, l'étape g) d'élimination des particules de carbone et/ou de polymères est mise en oeuvre après l'étape c) et avant l'étape d) par calcination de la masse solide obtenue à l'étape c).

Dans tous les modes de mise en oeuvre du procédé de l'invention, de préférence, les étapes e), j), m), p), s) et u) de séparation de la partie solide de la partie liquide sont des étapes de filtration ou de centrifugation.

Egalement dans les modes de mise en oeuvre du procédé de l'invention, de préférence, l'étape f) de dissolution de la "black mass" dans un acide est réalisée avec une solution aqueuse contenant 4 mol/L d'un acide choisi parmi l'acide nitrique, l'acide chlorhydrique et l'acide sulfurique avec un rapport masse de solide à dissoudre/masse de la solution aqueuse d'acide compris entre 5 et 20%.

Cette étape f) de dissolution de la "black mass" peut de plus être réalisée à une température comprise entre 20°C et la température d'ébullition de l'acide utilisé, cette température étant en général comprise entre 80°C et 120°C.

Dans une variante du procédé de l'invention, l'étape h) d'oxydation du fer de degré d'oxydation 2+ en fer de degré d'oxydation +3 est mise en oeuvre en même temps que l'étape f).

De préférence, dans toutes les variantes du procédé de l'invention, les étapes i), n) et s) d'ajustement du pH de la solution sont mises en oeuvre par ajout de la phase aqueuse obtenue à l'étape c) contenant de la potasse.

L'invention sera mieux comprise et d'autres avantages et caractéristiques de celle-ci apparaîtront plus clairement à la lecture de la description explicative qui suit et qui est faite en référence aux figures dans lesquelles :
- la figure 1 montre l'évolution des concentrations en lanthane, fer, cobalt, manganèse et nickel d'une solution provenant de la dissolution complète de 2,5 g de la partie de la batterie principalement composée de l'acier hydrurable et de l'électrode négative ("black mass") d'un accumulateur Ni-MH dans 50 ml d'acide nitrique en fonction du pH qui a été modifié par ajout progressif de NaOH (2 à 10 mol/l),
- la figure 2 montre l'évolution de la concentration en nickel de cette "black mass" lors de la mise en oeuvre de l'étape s) du procédé de l'invention,
- la figure 3 montre l'évolution de la concentration en manganèse de cette "black mass", en fonction du pH, lors de la mise en oeuvre de l'étape 1) du procédé de l'invention,
- la figure 4 montre le spectre de diffraction des rayons X du précipité formé lors de la mise en oeuvre de l'étape 1) du procédé de l'invention, et
- la figure 5 montre l'évolution de la concentration en lanthane et nickel en fonction de la quantité d'acide oxalique ajoutée lors de l'étape q) du procédé de l'invention.

Le procédé de l'invention permet de récupérer de manière sélective les terres rares, principalement le lanthane, le nickel, le cobalt, le manganèse, en présence de fer, qui sont contenus dans un accumulateur Ni-MH.

Ce procédé permet également de récupérer ces éléments sous la forme de composés directement utilisables pour la fabrication d'un nouvel accumulateur Ni-MH.

De plus, le procédé de l'invention permet de récupérer ces éléments de manière quantitative, c'est-à-dire avec un rendement global de 90%, et avec une haute pureté, c'est-à-dire avec un taux d'impuretés inférieur à 100 ppm.

Le procédé de l'invention comprend tout d'abord une étape notée a) de broyage de l'accumulateur, ou, de préférence, des accumulateurs Ni-MH, en particulier usagés ou non conformes, par exemple à l'aide d'un broyeur à couteaux pour diviser les accumulateurs et faciliter la récupération de leurs enveloppes externes généralement riches en fer et des séparateurs en polymère.

De préférence, afin d'éviter les échauffements, la vitesse de broyage est inférieure à 500 tr/min.

Au cours de ce broyage, le fer provenant de l'enveloppe externe des accumulateurs vient "polluer" l'électrolyte, les électrodes etc... qui représente la matière riche en terres rares, cobalt, nickel et manganèse.

Et c'est ce fer qui rend la séparation des terres rares, du cobalt, du nickel et du manganèse difficile car la séparation chimique de ces éléments qui précipitent, par exemple sous forme de dioxyde, dans le même domaine de pH de 7 à 8,5, devient pratiquement impossible.

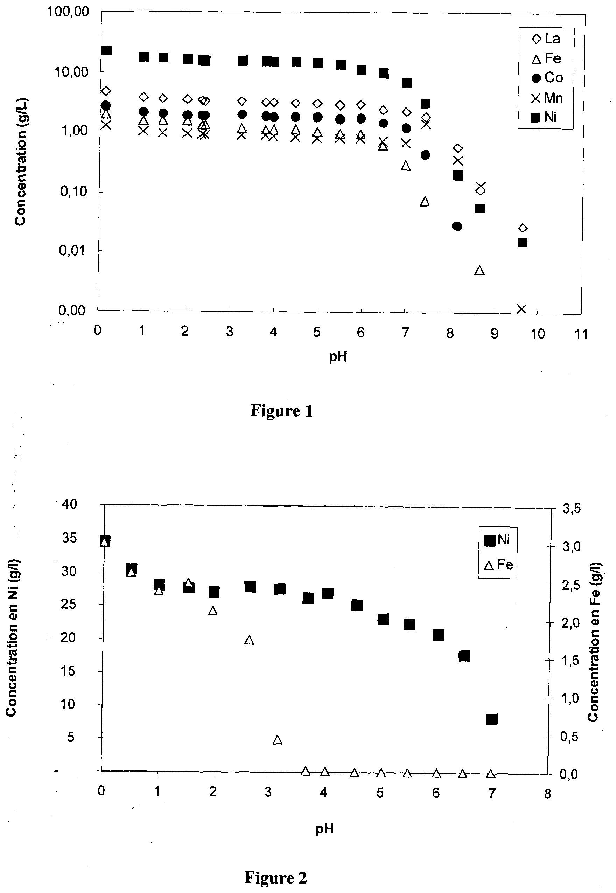

En effet, comme cela est montré en figure 1, qui montre l'évolution de la concentration en g/l dans une solution aqueuse contenant du lanthane, du fer, du cobalt, du manganèse et du nickel, en fonction du pH, tous ces éléments précipitent dans le même intervalle de pH.

Or, le procédé de l'invention permet de séparer chacun des éléments que constituent les terres rares, le fer, le cobalt, le manganèse et le nickel sous la forme d'un composé pur et utilisable directement pour former de nouveaux accumulateurs Ni-MH.

La seconde étape, étape b), du procédé de l'invention est une étape de lavage à l'eau des accumulateurs broyés à l'étape a).

Cette étape a pour but d'éliminer de la phase solide la potasse utilisée en tant qu'électrolyte dans cette technologie d'accumulateurs.

A l'étape c) du procédé de l'invention, la phase aqueuse contenant la potasse est séparée de la phase solide et récupérée. Cette étape est effectuée par filtration, par exemple à l'aide d'un filtre presse.

A l'étape d) du procédé de l'invention, la fraction solide résultante subit un second broyage pour rendre plus efficace la séparation de ce qu'on appelle la "black mass" principalement composée de l'alliage hydrurable de l'électrode négative de la fraction composée de la grille de nickel de l'électrode positive, des séparateurs en polymère et de l'enveloppe en acier des accumulateurs Ni-MH.

De préférence, cette étape d), de broyage, est précédée d'une étape d'élimination de l'eau résiduelle.

Cette étape d'élimination de l'eau résiduelle est effectuée après l'étape c) de séparation et avant l'étape d) de second broyage.

Elle peut être mise en oeuvre de deux façons différentes.

La première consiste à sécher la fraction solide obtenue à l'étape c) à une température inférieure à 100°C.

La seconde consiste à calciner cette fraction solide à 500°C afin d'éliminer les composés organiques tels que les particules de carbone et/ou de polymère.

Dans cette seconde variante du procédé de l'invention, l'étape g) d'élimination des particules de carbone et/ou de polymères est mise en oeuvre dès le début du procédé.

Dans tous les cas, après l'étape de second broyage de la phase solide, les particules ayant leur plus grande dimension inférieure à 1 mm sont séparées, par exemple par tamisage, et récupérées, à l'étape c). Cette phase solide est appelée dans ce texte "black mass".

La partie solide ayant une plus grande dimension supérieure ou égale à 1 mm est rejetée.

La "black mass" récupérée à l'étape e) est ensuite, à l'étape f) du procédé de l'invention, dissoute dans une acide concentré.

Cette dissolution est de préférence effectuée selon un rapport masse de solide à dissoudre/masse de la solution acide utilisée compris entre 5 et 20%, en poids, avec un acide dilué à une concentration inférieure ou égal à 4 mol/L. L'acide peut être de l'acide nitrique, de l'acide sulfurique ou encore de l'acide chlorhydrique.

Pour accélérer la réaction de dissolution de la "black mass", cette étape f) peut être mise en oeuvre à une température comprise entre 20°C et la température d'ébullition de l'acide utilisé, cette température étant, en général, comprise entre 80°C et 120°C.

Toujours pour accélérer la réaction de dissolution de la "black mass", on peut également ajouter à l'étape f) un agent d'oxydation, tel que du peroxyde d'hydrogène. L'utilisation de cet agent oxydant est d'autant plus intéressante qu'il permet d'oxyder le fer de degré d'oxydation +2 en fer de degré d'oxydation +3, ce qui facilitera se récupération sélective ultérieure.

On procède ensuite à l'étape g) d'élimination des particules de carbone et/ou de polymères, si celle-ci n'a pas été mise en oeuvre avant l'étape d) de second broyage comme expliqué ci-dessus.

A l'étape h), on traite la solution obtenue qui contient donc les terres rares, le cobalt, le nickel, le manganèse ainsi que le fer.

Dans l'étape h) du procédé de l'invention, le fer de degré d'oxydation +2 contenu dans la solution est oxydé en fer de degré d'oxydation +3, par ajout de peroxyde d'hydrogène, si ce peroxyde d'hydrogène n'a pas été ajouté lors de l'étape f) de dissolution de la "black mass".

L'ajout de peroxyde d'hydrogène est effectué de façon quantitative en fonction de la teneur en fer de la solution déterminée préalablement par analyse chimique. La réaction qui se produit est la suivante :

2Fe²⁺+H₂O₂+2H⁺ → 2H₂O+2Fe³⁺.

Ensuite, à l'étape i) du procédé de l'invention, le fer de degré d'oxydation +3 est précipité par ajustement du pH de la solution à 3,5.

A l'étape j), le fer précipité sous la forme hydroxyde Fe(OH)₃ est récupéré par filtration ou centrifugation et lavé à l'eau. Il pourra être ensuite utilisé.

Puis, à l'étape k), la solution contenant la "black mass", dont le précipité d'hydroxyde de fer a été séparé, est amenée à pH 1 par ajout d'acide concentré. Cet acide peut être tout acide mais, de préférence, on utilisera le même acide que celui utilisé pour séparer la "black mass".

A l'étape 1), le procédé de l'invention comprend l'oxydation du manganèse de degré d'oxydation +2 en manganèse +4 par un ajout de NaClO, ce qui fait que le manganèse de degré d'oxydation +4 précipite immédiatement en oxyde de manganèse MnO₂. L'ajout de NaClO est effectué de façon quantitative en respectant l'équation suivante :

Mn²⁺+NaClO+H₂O → MnO₂ + Na⁺+Cl⁻+2H⁺.

Afin que la réaction soit complète, un rapport molaire NaClO/Mn=2 est respecté.

A l'étape m), du procédé de l'invention, le précipité de MnO₂ est séparé de la solution et est récupéré par filtration ou centrifugation et lavé à l'eau.

Une fois le manganèse séparé de la solution, à l'étape n) du procédé de l'invention, le pH de la solution contenant le reste de la "black mass" est amené à 3, par ajout d'une base.

Et, à l'étape suivante, l'étape o), du NaClO est à nouveau ajouté dans la solution afin d'oxyder le cobalt de degré d'oxydation +2 en cobalt de degré d'oxydation +3 qui précipite alors sous la forme d'un hydroxyde de formule Co₂O₃.3H₂O selon la réaction suivante :

2Co²⁺+NaClO+H₂O+4OH⁻ → Co₂O₃.3H₂O + Na⁺+Cl⁻.

Afin que la réaction soit complète, un rapport molaire NaClO/Co=3 est respecté.

A l'étape p) suivante, le précipité de Co₂O₃.3H₂O est récupéré par filtration ou centrifugation et lavé à l'eau.

A l'étape q) suivante, la solution contenant le reste de la "black mass" est amenée à pH = 1, par ajout d'acide.

Puis, à l'étape r) de l'acide oxalique est versé dans la solution restante pour précipiter les terres rares sous forme d'oxalate.

En effet, les oxalates de terres rares présentent une très faible solubilité, de l'ordre de 0,0008 g/L à 25°C pour l'oxalate de lanthane, par rapport à l'oxalate de nickel qui est soluble en milieu acide.

A l'étape s) du procédé de l'invention, le précipité d'oxalate de terres rares est séparé de la solution et lavé à l'eau.

Le nickel peut alors être lui aussi séparé.

Pour cela, à l'étape t) suivante du procédé de l'invention, le pH de la solution contenant le reste de la "black mass" est ajusté à 9, par ajout d'une base pour former un précipité de Ni(OH)₂.

Et, enfin, le précipité d'hydroxyde de nickel est séparé et lavé à l'étape u) du procédé de l'invention.

Selon un mode de mise en oeuvre particulièrement préféré, les étapes d'ajustement du pH, lorsqu'il est augmenté, c'est-à-dire aux étapes i), n), et t), sont effectuées par ajout de la phase aqueuse contenant de la potasse obtenue à l'étape c) du procédé de l'invention.

Afin de mieux faire comprendre l'invention, on va maintenant en décrire, à titre purement illustratif et non limitatif, un mode de mise en oeuvre.

### Exemple 1 :

### Elimination du fer par tamisage : étapes a) à e)

120 g d'accumulateurs Ni-MH sont broyés à l'aide d'un broyeur à couteau RETSCH SM300 équipé d'un tamis de fond de maille de 1 cm² à la vitesse de 700 tr/min.

La matière récupérée est lavée sous agitation à 30 tr/min dans 2 L d'eau. Après filtration, la fraction solide est séchée à 80°C pendant 10H, puis broyée à nouveau dans les mêmes conditions.

Une première analyse chimique de la fraction solide est réalisée sur 2 échantillons. Les résultats obtenus sont reportés au tableau 2 suivant :

**Tableau 2 : Composition de la fraction solide broyée après lavage et séchage :**

| | Sans tamisage | |
|---|---|---|
| Elément | Echantillon 1 | Echantillon 2 |
| | % masse | % masse |
| Ni | 46,59 | 51,76 |
| **Fe** | **17,17** | **10,28** |
| Co | 4,48 | 4,84 |
| Mn | 1,88 | 2,02 |
| La | 7,68 | 8,11 |
| Fraction organique | 22,2 | 22,99 |

La fraction solide est ensuite tamisée à 500 µm. 2 prélèvements de fraction inférieure à 500 µm sont analysés. Les résultats obtenus sont reportés au tableau 3 suivant :

**Tableau 3 : Composition de la fraction solide broyée après lavage et séchage et tamisée <500 µm :**

| | Fraction tamisée <500 µm | |
|---|---|---|
| Elément | Prélèvement 3 | Prélèvement 4 |
| | % masse | % masse |
| Ni | 51,41 | 51,43 |
| **Fe** | **3,90** | **4,37** |
| Co | 5,57 | 5,62 |
| Mn | 2,54 | 2,55 |
| La | 9,94 | 9,80 |
| Fraction organique | 26,64 | 26,23 |

L'opération de tamisage à 500 µm permet de réduire significativement la teneur en Fe de la "black mass" à traiter (ici on est à l'étape e)) ce qui a pour conséquence de réduire la quantité d'acide requise pour sa dissolution et de faciliter la séparation des éléments en solution.

### Extraction du fer : étapes f), g) et n) à j)

2,5 g de la "black mass" issue de l'étape e) sont dissous dans 50 ml d'acide nitrique à 2 mol/L. Les particules résiduelles de carbone et de polymère sont éliminées par filtration. Puis, 2 ml de H₂O₂ à 30% en volume (Sigma-Aldrich) sont ajoutés, puis le pH de la solution est remonté par ajout de KOH issu de l'étape b). Un précipité se forme à partir de pH=1,8. L'analyse chimique de prélèvements réguliers permet de suivre les concentrations en fer et en nickel de la solution et sont reportées en figure 2 annexée. La figure 2 montre clairement la récupération sélective du fer.

A l'issue de la séparation, la présence de fer n'est pas détectable, montrant un rendement de récupération totale. En raison de l'insolubilité de l'hydroxyde de fer, ce dernier peut être lavé intensivement. Après lavage, l'analyse chimique montre que la teneur en impuretés K de l'hydroxyde de fer obtenu est inférieure à 20 ppm.

### Extraction du manganèse : étapes k) à m)

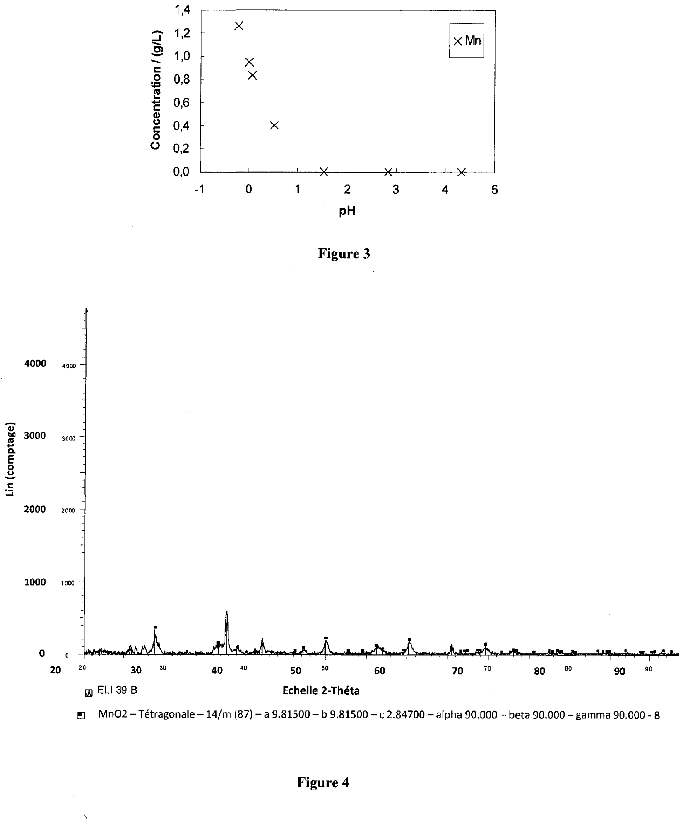

La solution résultante de l'étape j) précédente est ensuite acidifiée jusqu'à pH=1 par ajout d'acide nitrique (HNO₃) à 2 mol/L. Un ajout de 5 mL NaClO à 4% en volume est progressivement effectué. Instantanément, un précipité se forme. Cet ajout progressif s'accompagne d'une remontée du pH. Des prélèvements sont effectués et des analyses chimiques du manganèse sont réalisées. Les résultats sont montrés en figure 3. La figure 3 montre clairement la récupération sélective du manganèse. La figure 4 montre le spectre DRX de la poudre récoltée montrant la nature cristalline et la composition de l'oxyde de manganèse.

A l'issue de la séparation, la concentration en manganèse est de 5,29.10⁻⁴ g/L, ce qui correspond à un rendement de récupération supérieur à 99%. L'analyse chimique effectuée à partir du solide récupéré après un lavage intensif à l'eau montre une pollution inférieure à 20 ppm de K et 15 ppm de Na.

### Extraction du Cobalt : étapes o) et p)

20 ml de la solution résultante de l'étape m) est amené à pH=3 par ajout de KOH issu de l'étape b). Un ajout de 2 ml de NaClO à 4% en volume est progressivement effectué. Instantanément, un précipité se forme. A l'issue de la récupération par filtration du précipité, la concentration en cobalt est mesurée à 0,053 g/l correspondant à uné récupération de 97,3% de cobalt initialement présent après lixiviation. L'analyse chimique de l'hydroxyde de cobalt après lavage intensif à l'eau montre une pollution inférieure à 20 ppm de K, 20 ppm de Na et 50 ppm de Ni.

### Extraction du lanthane et des terres rares : étapes r) et s)

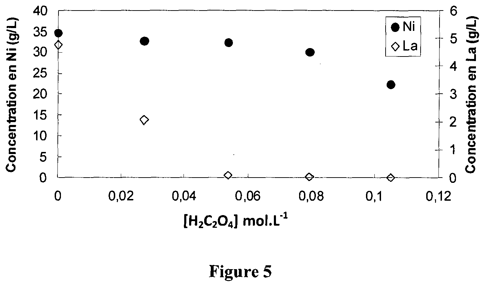

50 ml d'une solution résultante de l'étape p), c'est-à-dire après extraction sélective du fer du manganèse et du cobalt à pH=3, sont acidifiée jusqu'à pH=1 par ajout d'acide nitrique (HNO₃) à 2 mol/L, puis traités par ajout progressif d'acide oxalique à 0,5 mol/l. Des prélèvements sont effectués et analysés. La figure 5 montre l'évolution de la concentration en lanthane et nickel en fonction de la concentration en acide oxalique et montre clairement la récupération sélective du lanthane. L'analyse chimique du surnageant après précipitation de l'oxalate de terre rare, montre une concentration résiduelle de 0,0012 g/l soit 98,7% de récupération. La pureté de l'oxalate est mesurée à 98,9% principalement due à une pollution en nickel.

### Récupération du nickel : étapes t) et u)

20 ml de la solution résultante de l'étape r) est ensuite basifié par ajout de KOH issu de l'étape b) jusqu'à pH= 10. Dès pH=6, un précipité d'hydroxyde de nickel apparaît. Au-delà de pH=9,5, la concentration en nickel est inférieure à 0,13 g/l correspondant à un taux de récupération supérieur à 97,6%. L'analyse chimique du produit récupéré montre une relative bonne pureté supérieure à 98,7% avec la présence de La (0,1%), de Co et Mn (<0,1%) et de K (0,9%) pouvant être éliminés par un lavage plus intensif.

## Revendications

1. Procédé de récupération sélective des terres rares, du nickel, du cobalt, du manganèse et du fer contenu dans un accumulateur Ni-MH comprenant les étapes suivantes :
a) broyage de l'accumulateur,
b) élimination de la potasse contenue dans l'accumulateur broyé obtenu à l'étape a), par lavage avec de l'eau,
c) séparation de la phase aqueuse contenant la potasse, par filtration et récupération d'une part, d'une phase solide et, d'autre part, de la phase aqueuse,
d) broyage de la phase solide obtenue,
e) séparation des parties broyées de la phase solide ayant une plus grande dimension inférieure à 1 mm et récupération de cette phase solide ayant une plus grande dimension inférieure à 1 mm, cette phase étant appelée "black mass",
f) dissolution de la "black mass" obtenue dans un acide,
g) élimination des particules résiduelles de carbone et/ou de polymères,
h) oxydation du fer de degré d'oxydation +2 contenu dans la solution obtenue après les étapes f) et g) en fer de degré d'oxydation +3,
i) précipitation du fer de degré d'oxydation +3 par ajustement du pH de la solution dans lequel il est contenu à 3,5,
j) séparation et lavage du précipité obtenu à l'étape i),
k) ajustement du pH de la solution obtenue après l'étape j) à 1,
l) ajout de NaClO dans la solution obtenue à l'étape k) pour former un précipité de MnO₂,
m) séparation et lavage du précipité de MnO₂,
n) ajustement du pH de la solution obtenue après l'étape m) à 3,
o) ajout de NaClO dans la solution obtenue à l'étape n) pour former un précipité de Co₂O₃.3H₂O,
p) séparation et lavage du précipité de Co₂O₃.3H₂O, formé à l'étape o),
q) ajustement du pH de la solution obtenue à l'étape p) à 1,
r) ajout d'acide oxalique dans la solution obtenue à l'étape q) pour précipiter les terres rares sous forme d'oxalate,
s) séparation du précipité formé à l'étape r),
t) ajustement du pH de la solution obtenue après l'étape s) pour former un précipité de Ni(OH)₂, et
u) séparation du précipité obtenu à l'étape t).

2. Procédé selon la revendication 1, **caractérisé en ce qu'**il comprend de plus, après l'étape c) et avant l'étape d), une étape de séchage de la phase solide obtenue à l'étape c) à une température inférieure à 100°C.

3. Procédé selon la revendication 1 ou 2, **caractérisé en ce que** l'étape g) d'élimination des particules de carbone et/ou de polymères est une étape de filtration de la solution obtenue à l'étape f).

4. Procédé selon la revendication 1, **caractérisé en ce que** l'étape g) d'élimination des particules de carbone et/ou de polymères est mise en oeuvre après l'étape c) et avant l'étape d) par calcination de la masse solide obtenue à l'étape c).

5. Procédé selon l'une quelconque des revendications précédentes, **caractérisé en ce que** les étapes e), j), m), p), s) et u) de séparation de la partie solide de la partie liquide sont des étapes de filtration ou de centrifugation.

6. Procédé selon l'une quelconque des revendications précédentes, **caractérisé en ce que** l'étape f) de dissolution de la "black mass" dans un acide est réalisée avec une solution aqueuse contenant 4 mol/L d'un acide choisi parmi l'acide nitrique, l'acide chlorhydrique et l'acide sulfurique avec un rapport masse de solide à dissoudre/masse de solution d'acide compris entre 5 et 20%.

7. Procédé selon l'une quelconque des revendications précédentes, **caractérisé en ce que** l'étape f) de dissolution de la "black mass" est effectuée à une température comprise entre 20°C et la température d'ébullition de l'acide utilisé.

8. Procédé selon l'une quelconque des revendications précédentes, **caractérisé en ce que** l'étape h) d'oxydation du fer de degré d'oxydation 2+ en fer de degré d'oxydation +3 est mise en oeuvre en même temps que l'étape f).

9. Procédé selon l'une quelconque des revendications précédentes, **caractérisé en ce que** les étapes i), n) et t) d'ajustement du pH de la solution sont mises en oeuvre par ajout de la phase aqueuse obtenue à l'étape c)contenant de la potasse.

## Patentansprüche

1. Verfahren zur selektiven Rückgewinnung von Seltenen Erden, Nickel, Kobalt, Mangan und Eisen, enthalten in einem NiMH-Akku, umfassend die folgenden Schritte:
a) Zerkleinern des Akkumulators,
b) Entfernen des Kaliumcarbonats, das in dem zerkleinerten Akkumulator enthalten ist, der in dem Schritt a) erhalten wird, durch Waschen mit Wasser,
c) Trennen der wässrigen Phase, die Kaliumcarbonat enthält, durch Filtern und Rückgewinnen einerseits der festen Phase und andererseits der wässrigen Phase,
d) Zerkleinern der erhaltenen festen Phase,
e) Trennen der zerkleinerten Teile der festen Phase, die eine größere Abmessung von unter 1 mm aufweisen, und Wiedergewinnen dieser festen Phase, die eine größere Abmessung von unter 1 mm aufweist, wobei diese Phase "Schwarzmasse" genannt wird,
f) Auflösen der erhaltenen "Schwarzmasse" in einer Säure,
g) Entfernen der Restpartikel von Kohlenstoff und/oder von Polymeren,
h) Oxidieren des Eisens der Oxidationsstufe +2, das in der Lösung enthalten ist, die nach den Schritten f) und g) erhalten wird, zu Eisen der Oxidationsstufe +3,
i) Ausfällen des Eisens der Oxidationsstufe +3 durch Einstellen des pH-Werts der Lösung, in der es enthalten ist, auf 3,5,
j) Trennen und Waschen des Niederschlags, der in dem Schritt i) erhalten wird,
k) Einstellen des pH-Werts der Lösung, die nach dem Schritt j) erhalten wird, auf 1,
l) Zufügen von NaClO zu der Lösung, die in dem Schritt k) erhalten wird, um einen MnO₂-Niederschlag zu bilden,
m) Trennen und Waschen des MnO₂-Niederschlags,
n) Einstellen des pH-Werts der Lösung, die nach dem Schritt m) erhalten wird, auf 3,
o) Zufügen von NaClO zu der Lösung, die in dem Schritt n) erhalten wird, um einen CO₂O₃.3H₂O-Niederschlag zu bilden,
p) Trennen und Waschen des CO₂O₃.3H₂O-Niederschlags, der in dem Schritt o) gebildet wird,
q) Einstellen des pH-Werts der Lösung, die in dem Schritt p) erhalten wird, auf 1,
r) Zufügen von Oxalsäure zu der Lösung, die in dem Schritt q) erhalten wird, um die Seltenen Erden in Form von Oxalat zu bilden,
s) Trennen des Niederschlags, der in dem Schritt r) gebildet wird,
t) Einstellen des pH-Werts der Lösung, die nach dem Schritt s) erhalten wird, um einen Ni(OH)₂-Niederschlag zu bilden, und
u) Trennen des Niederschlags, der in dem Schritt t) wird.

2. Verfahren nach Anspruch 1, **dadurch gekennzeichnet, dass** es ferner nach dem Schritt c) und vor dem Schritt d) einen Schritt des Trocknens der festen Phase, die in dem Schritt c) erhalten wird, bei einer Temperatur von unter 100 °C aufweist.

3. Verfahren nach Anspruch 1 oder 2, **dadurch gekennzeichnet, dass** der Schritt g) des Entfernens der Restpartikel von Kohlenstoff und/oder von Polymeren ein Schritt des Filterns der Lösung, die in dem Schritt f) erhalten wird, ist.

4. Verfahren nach Anspruch 1, **dadurch gekennzeichnet, dass** der Schritt g) des Entfernens der Restpartikel von Kohlenstoff und/oder von Polymeren nach dem Schritt c) und vor dem Schritt d) durch Kalzinieren der festen Masse, die in dem Schritt c) erhalten wird, umgesetzt wird.

5. Verfahren nach einem der vorhergehenden Ansprüche, **dadurch gekennzeichnet, dass** die Schritte e), j), m), p), s) und u) des Trennens des festen Teils von dem flüssigen Teil Schritte des Filterns oder des Zentrifugierens sind.

6. Verfahren nach einem der vorhergehenden Ansprüche, **dadurch gekennzeichnet, dass** der Schritt f) des Auflösens der "Schwarzmasse" in einer Säure mit einer wässrigen Lösung, die 4 mol/l einer Säure enthält, die ausgewählt wird aus Salpetersäure, Salzsäure und Schwefelsäure, mit einem Verhältnis von Masse des aufzulösenden Feststoffs/Masse der Säurelösung, das zwischen 5 und 20 % liegt, durchgeführt wird.

7. Verfahren nach einem der vorhergehenden Ansprüche, **dadurch gekennzeichnet, dass** der Schritt f) des Auflösens der "Schwarzmasse" bei einer Temperatur durchgeführt wird, die zwischen 20 °C und der Siedetemperatur der verwendeten Säure liegt.

8. Verfahren nach einem der vorhergehenden Ansprüche, **dadurch gekennzeichnet, dass** der Schritt h) des Oxidierens des Eisens der Oxidationsstufe +2 zu Eisen der Oxidationsstufe +3 gleichzeitig mit dem Schritt f) umgesetzt wird.

9. Verfahren nach einem der vorhergehenden Ansprüche, **dadurch gekennzeichnet, dass** die Schritte i), n) und t) des Einstellens des pH-Werts der Lösung durch Zufügen der wässrigen Phase, die in Schritt c) erhalten wird, die Kaliumcarbonat enthält, umgesetzt werden.

## Claims

1. Process for the selective recovery of rare earth metals, nickel, cobalt, manganese and iron present in an Ni-MH battery, comprising the following steps:
a) grinding of the battery,
b) removal of the potassium hydroxide present in the ground battery obtained in step a) by washing with water,
c) separation of the aqueous phase containing the potassium hydroxide by filtration and recovery, on the one hand, of a solid phase, and, on the other hand, of the aqueous phase,
d) grinding of the solid phase obtained,
e) separation of the ground parts of the solid phase having a greatest dimension of less than 1 mm and recovery of this solid phase having a greatest dimension of less than 1 mm, this phase being known as "black mass",
f) dissolution of the obtained "black mass" in an acid,
g) removal of the residual particles of carbon and/or of polymers,
h) oxidation of the iron of state of oxidation +2 present in the solution obtained after steps f) and g) to give iron of state of oxidation +3,
i) precipitation of the iron of state of oxidation +3 by adjustment of the pH of the solution in which it is present to 3.5,
j) separation and washing of the precipitate obtained in step i),
k) adjustment to 1 of the pH of the solution obtained after step j),
l) addition of NaClO to the solution obtained in step k) in order to form an MnO₂ precipitate,
m) separation and washing of the MnO₂ precipitate,
n) adjustment to 3 of the pH of the solution obtained after step m),
o) addition of NaClO to the solution obtained in step n) in order to form a Co₂O₃.3H₂O precipitate,
p) separation and washing of the Co₂O₃.3H₂O precipitate formed in step o),
q) adjustment to 1 of the pH of the solution obtained in step p),
r) addition of oxalic acid to the solution obtained in step q) in order to precipitate the rare earth metals in the oxalate form,
s) separation of the precipitate formed in step r),
t) adjustment of the pH of the solution obtained after step s) in order to form an Ni(OH)₂ precipitate, and
u) separation of the precipitate obtained in step t).

2. Process according to Claim 1, **characterized in that** it additionally comprises, after step c) and before step d), a step of drying of the solid phase obtained in step c) at a temperature of less than 100°C.

3. Process according to Claim 1 or 2, **characterized in that** step g) of removal of the particles of carbon and/or of polymers is a step of filtration of the solution obtained in step f).

4. Process according to Claim 1, **characterized in that** step g) of removal of the particles of carbon and/or of polymers is carried out after step c) and before step d) by calcination of the solid mass obtained in step c).

5. Process according to any one of the preceding claims, **characterized in that** steps e), j), m), p), s) and u) of separation of the solid part from the liquid part are steps of filtration or of centrifugation.

6. Process according to any one of the preceding claims, **characterized in that** step f) of dissolution in an acid of the "black mass" is carried out with an aqueous solution containing 4 mol/l of an acid chosen from nitric acid, hydrochloric acid and sulfuric acid with a weight of solid to be dissolved/weight of acid solution ratio of between 5 and 20%.

7. Process according to any one of the preceding claims, **characterized in that** step f) of dissolution of the "black mass" is carried out at a temperature of between 20°C and the boiling point of the acid used.

8. Process according to any one of the preceding claims, **characterized in that** step h) of oxidation of the iron of state of oxidation +2 to give iron of state of oxidation +3 is carried out at the same time as step f).

9. Process according to any one of the preceding claims, **characterized in that** steps i), n) and t) of adjustment of the pH of the solution are carried out by addition of the aqueous phase obtained in step c) containing potassium hydroxide.
